# EUROPEAN PATENT SPECIFICATION

(11) **EP 0 558 964 B1**
(45) Date of publication and mention of the grant of the patent: **07.10.1998**
(21) Application number: 93102062.2
(22) Date of filing: 10.02.1993
(51) Int. Cl.: C06D 3/00, C09B 29/085, C09B 29/50, C09B 29/15, C09B 1/54, C09B 1/28, C09B 67/22

(54) **Colored smoking oil**
Farbiges rauchbildendes Öl
Huile fimigène colorée

(30) Priority: 12.02.1992 JP 59349/92
(43) Date of publication of application: 08.09.1993
(73) Proprietor: ORIENT CHEMICAL INDUSTRIES, LTD., Osaka-shi Osaka-fu (JP)
(72) Inventor: Otsuka, Masahiro, c/o Orient Chemical Industries, Neyagawa-shi, Osaka (JP); Inokuchi, Kuniharu, c/o Orient Chemical Industries, Neyagawa-shi, Osaka (JP)
(74) Representative: Liedl, Christine, Dipl.-Chem.

(56) References cited:
- EP-A- 553 858
- EP-A- 0 209 990
- EP-A- 0 387 201
- FR-A- 748 650
- FR-A- 2 457 310
- US-A- 1 716 797
- US-A- 2 396 710
- W. GERHARTZ ET AL. 'Ullmann's encyclopedia of industrial chemistry; Vol. A3: Antidiabetic drugs to benzoquinone and naphtoquinone dyes' 1985 , VCH VERLAGSGESELLSCHAFT MBH. , WEINHEIM, FEDERAL REPUBLIC OF GERMANY.
- W. GERHARTZ 'Ullmann's encyclopedia of industrial chemistry, Vol. A2: Aliphatic to antibiotics' 1985 , VCH VERLAGSGESELLSCHAFT MBH , WEINHEIM, FEDERAL REPUBLIC OF GERMANY
- R.L.M. ALLEN 'Colour Chemistry' 1971 , NELSON , LONDON, GREAT BRITAIN
- K. VENKATARAMAN 'The Chemistry of Synthetic Dyes, Vol. VIII' 1978 , ACADEMIC PRESS , NEW YORK, USA

## Description

The present invention relates to a colored smoking oil mainly for generating colored smoke using a smoking apparatus for aircraft.

In acrobatic flights etc. particularly of jet planes, figures, characters, etc. are often drawn in the sky by generating colored smoke. The five-ring Olympic emblem, propaganda characters, etc. are sometimes drawn. Such colored smoke is obtained by releasing colored smoking oil into high-temperature exhaust gas from jet planes etc. using a smoking apparatus such as that described in Japanese Patent Publication Open to Public Inspection No. 37098/1990.

Usually, colored smoking oil is produced by dispersing or dissolving and mixing a coloring agent in a smoking base oil such as naphthene-series or paraffin-series mineral oil. Since the smoking base oil generates bulky white smoke at 400 to 600 °C, colored smoke can be formed by coloring the white smoke with an atomized coloring agent, provided that the coloring agent has been dispersed or dissolved and mixed therein. To generate colored smoke on the ground by way of trial, a heating apparatus comprising a double-tube nozzle heater is used. In this case, heating temperature for the smoking oil is normally 500 to 600°C . As coloring agents for smoking oil, basic dyes and oil-soluble dyes have traditionally been used. For example, Japanese Patent Examined Publication No. 20099/1964 discloses the use of various oil-soluble azo dyes listed in the Color Index, such as p-dimethylaminoazobenzene and phenylazo-2-naphthol, Japanese Patent Examined Publication No. 12759/1966 discloses the use of anthraquinone oil-soluble dyes such as C.I. Solvent Red 111 and C.I. Solvent Blue 11.

However, conventional colored smoking oils have the following drawbacks:
1) Coloring agent solubility in naphthene-series or paraffin-series mineral oils or petroleum solvents as smoking base oils is low. Only a few of the oil-soluble dyes which have conventionally been used as such coloring agents exceed 10% by weight in saturation concentration in smoking base oils at normal temperature. For example, their saturated concentration in light oil or spindle oil at normal temperature is not higher than 5% by weight.
2) Coloring agent dispersibility in smoking base oil is poor. It is therefore necessary to add 20 to 30% by weight of a coloring agent to the smoking base oil and thermally melt and disperse it uniformly using a dispersing agent etc. to obtain colored smoke of the desired color density. For example, by thermally melting and mixing a mixture comprising 100 parts by weight of a naphthene-series or paraffin-series mineral oil, as a smoking base oil, 25 to 30 parts by weight of an oil-soluble dye or basic dye, as a coloring agent, and 0 to 10 parts by weight of a dispersing agent, using a ball mill etc., a dispersed or colloidal colored smoking oil is obtained. It is also possible to use a coloring agent which has previously been thermally molten and then cooled, solidified and milled. In any case, the coloring agent in the colored smoking oil is for the most part present in a dispersed state.
3) Storage stability is poor. Because conventional colored smoking oils are dispersion systems, separation of dye and smoking base oil results in precipitated solidified dye on the bottom of the container during long-term storage. It is therefore necessary to conduct a dispersing treatment such as vigorous stirring immediately before each flight so that operability is very poor.
4) The coloring agent need to be effectively sublimated and diffused in the atomized smoked base oil. In conventional colored smoking oils, the color density of obtained colored smoke is low because it is not easy to effectively and efficiently form fine particles of colored smoke due to the poor solubility or dispersibility of the coloring agent in the smoking base oil and because the coloring power of the coloring agent itself is low.

The object of the present invention is to provide a colored smoking oil which can be produced by dissolving a coloring agent with easy operation free of dispersion by hot melting and other treatments, which retains coloring agent solution stability even in long-term storage and which generates brilliantly and densely colored smoke.

The present inventors found that the above object is accomplished by a colored smoking oil containing a particular azo oil-soluble dye or anthraquinone dye, and developed the present invention.

Accordingly, the colored smoking oil of the present invention is a colored smoking oil comprising a naphthene-series or paraffin-series mineral oil and/or a high boiling petroleum organic solvent as a smoking base oil and a coloring agent, wherein said coloring agent is one or more kinds of oil-soluble dye soluble in said smoking base oil at concentrations of not lower than 20% by weight selected from the group consisting of a sec-butylphenylazo oil-soluble dye represented by the following formula I, an anthraquinone oil-soluble dye represented by the following formula II and an anthraquinone oil-soluble dye represented by the following formula III, which coloring agent is contained in solution at 15 to 40% by weight. 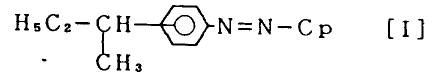 wherein Cp represents a coupling component residue selected from the group consisting of the following formulas (a); (b) and (c): 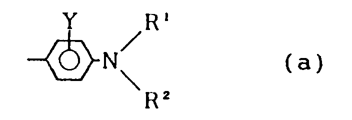 wherein R¹ and R² independently represent an alkyl group, hydroxyalkyl group or alkoxyalkyl group having 1 to 8 carbon atoms; Y represents a hydrogen, an alkyl group having 1 or 2 carbon atoms or an alkoxy group having 1 or 2 carbon atoms. 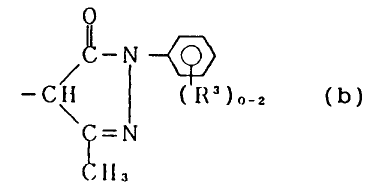 wherein (R³)₀₋₂ means zero to two substituents R³, each R³ independently representing an alkyl group having 1 to 4 carbon atoms or an alkoxy group having 1 to 8 carbon atoms. 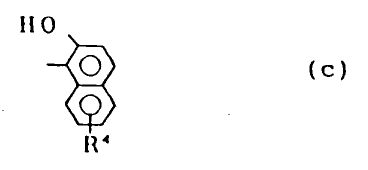 wherein R⁴ represents a hydrogen, an alkyl group having 1 to 12 carbon atoms, an alkoxy group having 1 to 8 carbon atoms or a styryl group. 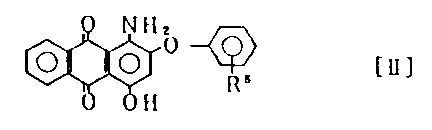 wherein R⁵ represents an alkyl group having 4 to 12 carbon atoms or an alkoxy group having 4 to 12 carbon atoms. 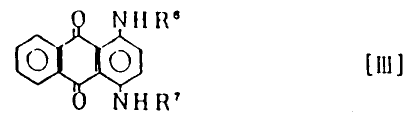 wherein R⁶ and R⁷ independently represent an alkyl group having 4 to 12 carbon atoms or an alkoxyalkyl group having 4 to 12 carbon atoms.

Because the colored smoking oil of the present invention contains a particular oil-soluble dye excellent in solubility in, and coloring power for, smoking base oil dissolved therein, the colored smoke atomized using a smoking apparatus has a brilliant and dense color. Also, because the coloring agent has been completely dissolved in the smoking base oil, the coloring agent remains stably soluble even in long-term storage. Moreover, because the coloring agent contained in the colored smoking oil of the present invention is a liquid dye per se or can be prepared as a dense solution, production of the colored smoking oil of the present invention can be carried out by dissolving the coloring agent with easy operation free of troublesome dispersion by hot melting and other treatments. In addition, sufficient colored smoke can be generated at temperatures lower by 100 to 200°C than conventional heating temperatures, so that applicability extends to a variety of apparatuses including jet engines with relatively low exhaust gas temperature and other aircraft engines.

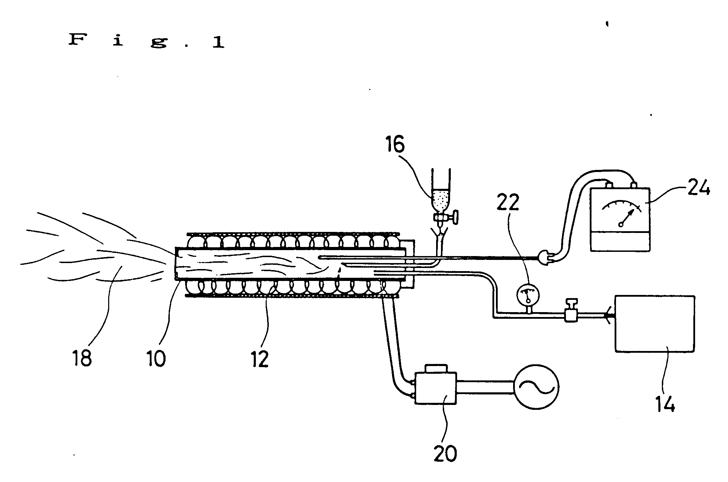

Figure 1 is a schematic diagram of a smoking apparatus for testing.

The sec-butylphenylazo oil-soluble dye represented by the above formula I is a yellow to orange monoazo dye.

This sec-butylphenylazo oil-soluble dye can be prepared by reacting sec-butylaniline, diazotized by a conventional method, with a coupler for forming the coupling component residue Cp (hereinafter also referred to as (H)Cp) selected from the group consisting of the above formulas (a), (b) and (c). This reaction can be carried out, for example, in a mixture of water and organic solvent or an aqueous system. Then, the precipitated dye can be extracted with an organic solvent (e.g., a hydrophobic organic solvent such as toluene or xylene), followed by removal of the solvent, to isolate the dye. The kind and position of the substituent in the coupling component (H)Cp and the presence or absence of the substituent has substantially no influence on the effect of the present invention.

The diazo component sec-butylaniline may be of any one with respect to the position of the substituent sec-butyl group, whether "ortho", "meta" or "para". The sec-butylaniline contained in the colored smoking oil of the present invention may be a mixture of such compounds of different positions of the substituent sec-butyl group.

The sec-butylphenylazo oil-soluble dye is a new liquid monoazo dye having no melting point or solidifying point in the temperature range from -20 to 25°C .

Examples of the coupling component (H)Cp corresponding to formula (a) include
N,N-dialkylanilines and derivatives thereof such as
N,N-dimethylaniline,
N,N-diethylaniline,
N,N-dibutylaniline,
N,N-dipropylaniline,
N,N-dimethoxyethylaniline,
N-ethyl-N-isopropylaniline,
N,N-diethyl-toluidine and
N,N-diethylanisidine;
N,N-(oxyalkyl)alkylanilines such as
N,N-bis(β-oxyethyl)aniline and
N-(β-oxyethyl)-N-ethylaniline.

Examples of the coupling component (H)Cp corresponding to formula (b) include pyrazolone derivatives such as
1-phenyl-3-methyl-5-pyrazolone,
1-(4-methylphenyl)-3-methyl-5-pyrazolone and
1-(4-methoxyphenyl)-3-methyl-5-pyrazolone.

Examples of the coupling component (H)Cp corresponding to formula (c) include
β-naphthol;
alkyl-substituted β-naphthols such as
   methyl-substituted β-naphthol,
   ethyl-substituted β-naphthol,
   octyl-substituted β-naphthol,
   nonyl-substituted β-naphthol and
   dodecyl-substituted β-naphthol; and
styryl-substituted β-naphthol.

The anthraquinone oil-soluble dye represented by the above formula II is a red dye excellent in solubility in naphthene-series or paraffin-series mineral oil or high boiling petroleum organic solvents.

This anthraquinone oil-soluble dye is obtained, for example, by reaction between a 2-bromo-substituted anthraquinone compound and an alkyl- or alkoxy-substituted phenol.

In formula II, examples of the alkyl group having 4 to 12 carbon atoms as R⁵ include n-butyl, sec-butyl, amyl, octyl, 2-ethylhexyl, nonyl and dodecyl and examples of the alkoxy group having 4 to 12 carbon atoms as R⁵ include butoxy, pentyloxy and hexyloxy.

The anthraquinone oil-soluble dye represented by the above formula III is a blue dye excellent in solubility in naphthene-series or paraffin-series mineral oil or high boiling petroleum organic solvents.

This anthraquinone oil-soluble dye is obtained, for example, by reaction between quinizarin and a mixture of various aliphatic amines having 4 to 12 carbon atoms which may be interrupted by oxygen.

In formula III, examples of the alkyl group having 4 to 12 carbon atoms as R⁶ or R⁷ include n-butyl, iso-butyl, sec-butyl, amyl and octyl and examples of the alkoxyalkyl group having 4 to 12 carbon atoms as R⁶ or R⁷ include 3-methoxypropyl and 3-octoxypropyl.

The coloring agent used for the present invention is an oil-soluble dye excellent in coloring power offering a brilliant color and is not categorized under acid dyes or basic dyes. Its molecular weight is desirably not higher than 600. This is because a colored smoking oil incorporating such a dye having a molecular weight exceeding 600 can fail to generate brilliantly and densely colored smoke due to the decreased sublimation property.

As the smoking base oil in the colored smoking oil of the present invention, known conventional compounds of low volatility, such as naphthene-series or paraffin-series mineral oils derived from crude oil, high boiling petroleum organic solvents, or mixtures thereof, can be used.

The mineral oil preferably has a boiling point in the range from about 200 to 400 °C ; for example, purified mineral oils such as light oil distilling between lamp oil and heavy oil upon distillation of crude oil, and petroleum-series lubricating oils such as spindle oil can be used. When using a mineral oil of low boiling point, it is difficult to obtain bulky white smoke due to the poor smoking capability so that the diffusing effect for the atomized coloring agent tends to decrease and thus hamper the obtainment of the desired colored smoke.

Desirably, the high boiling petroleum organic solvent used has a boiling point of not lower than 100°C. Examples of such organic solvents include
alicyclic hydrocarbon solvents such as
   ethylcyclohexane,
   cycloheptane,
   cyclooctane,
   decalin and tetralin; and
aliphatic hydrocarbon solvents such as
   n-octane,
   n-nonane and n-decane. Preferably, these are used in combination with the above-mentioned mineral oil. Also, these may be used in combination with aromatic hydrocarbons such as xylene and ethylnaphthalene.

Next, some examples of the oil-soluble dye used for the present invention and comparative dye examples are given in Table 1, with their solubilities in light oil, spindle oil and other petroleum products and their solution colors. The oil-soluble dyes shown in Table 1 are nothing more than examples, which are not to be construed as limitative on the present invention.

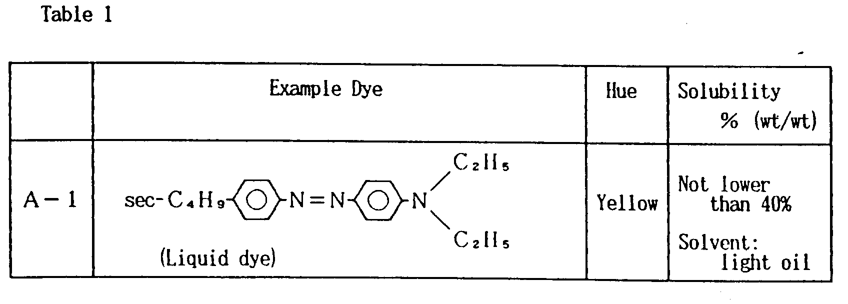

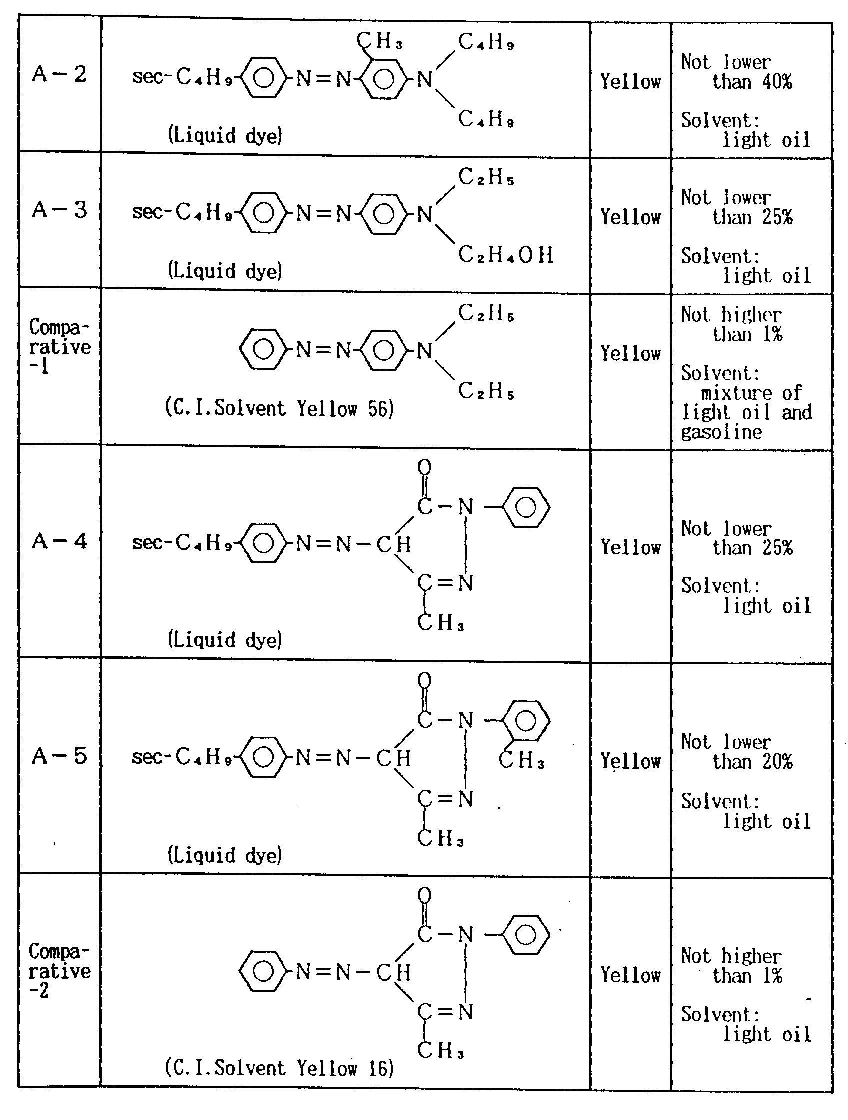

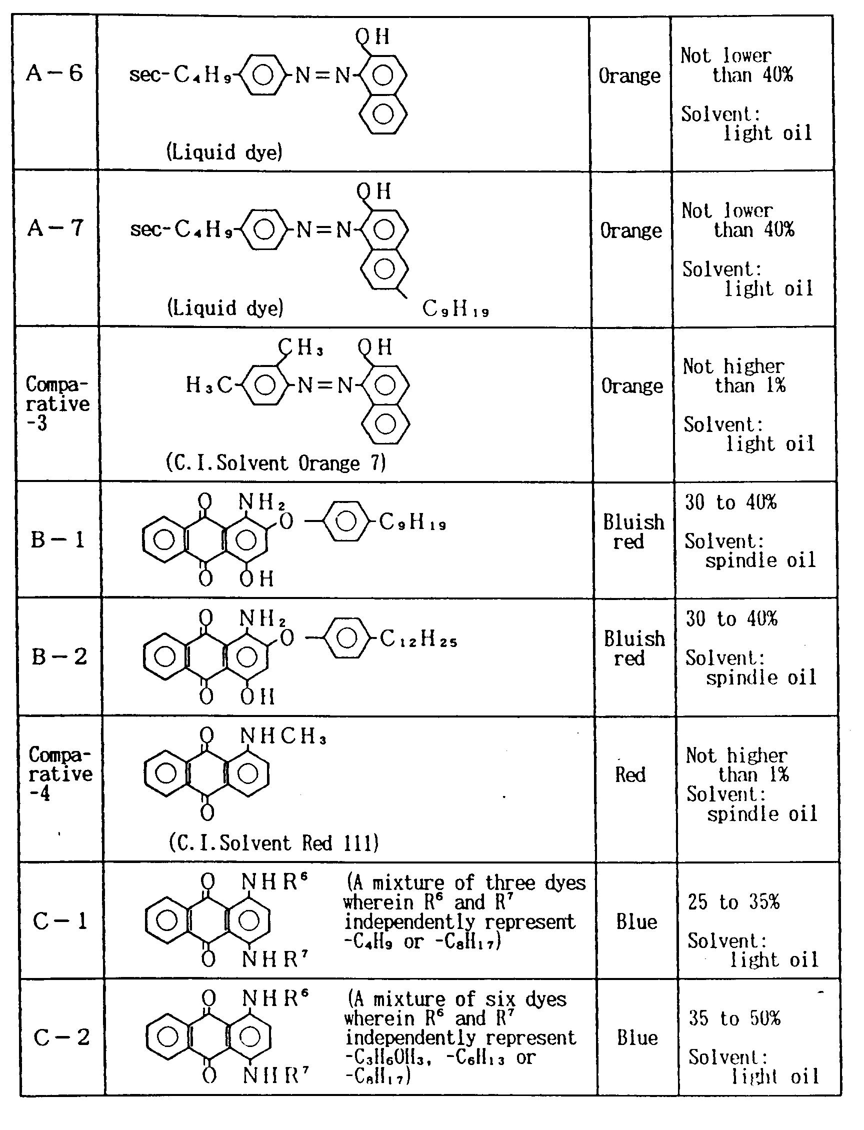

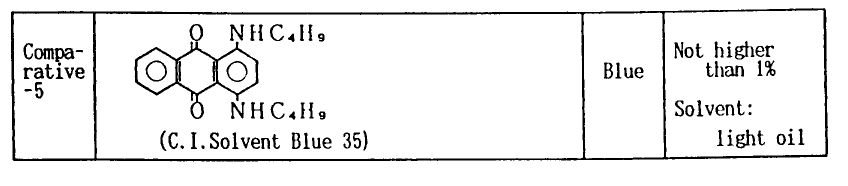

Basically, the colored smoking oil of the present invention can be prepared by adding the above oil-soluble dye directly to the above smoking base oil and mixing and dissolving it. The content of the oil-soluble dye is 15 to 40% by weight of the whole colored smoking oil composition. The preferable content is 20 to 30% by weight.

The colored smoking oil of the present invention can also be prepared by adding the above oil-soluble dye, in a dense solution in a high boiling petroleum organic solvent, to the above smoking base oil and mixing them. In this case, the oil-soluble dye concentration in the dense solution is preferably not lower than 35% by weight. When added as a dense solution to the smoking base oil, the oil-soluble dye dissolves very easily and uniformly in the smoking base oil, offering still better solution stability in long-term storage. The high boiling petroleum organic solvent used in the dense solution may be identical to the smoking base oil.

For example, a colored smoking oil (light oil used as base oil) having a viscosity of 10 to 100 cP (centipoise or mPas) at normal temperature can be obtained by mixing a compound comprising 100 parts by weight ("parts by weight" is hereinafter abbreviated "parts") of a naphthene-series or paraffin-series mineral oil, as a smoking base oil, and 20 to 25 parts of the above oil-soluble dye at room temperature or 30 to 50 °C . Because the oil-soluble dye as a coloring agent is present in solution in the colored smoking oil, the viscosity of the colored smoking oil is stable with substantially no increase over time.

Also, for example, a colored smoking oil (spindle oil used as base oil) having a viscosity of 10 to 100 mPas (cP) at normal temperature and containing an oil-soluble dye, as a coloring agent, at 20% by weight of the whole smoking oil composition can be obtained by mixing a compound comprising 50 parts of a naphthene-series or paraffin-series mineral oil, as a smoking base oil, and 100 parts of a dense solution containing 30% by weight of the above oil-soluble dye. Because the oil-soluble dye as a coloring agent is present in solution in the colored smoking oil, the viscosity of the colored smoking oil is stable with substantially no increase over time.

When using the colored smoking oil of the present invention to generate colored smoke on the ground by way of trial using a heating apparatus comprising a double-tube nozzle heater, a smoking oil heating temperature lower by 100 to 200°C than ordinary heating temperatures is sufficient.

### EXAMPLES

The present invention is hereinafter described in more detail by means of the following examples.

### --Preparation of the colored smoking oil of the present invention and performance test--

### Example 1

To 75 parts of a smoking base oil (spindle oil), 25 parts of the liquid dye of the present invention (Example Dye A-1) was added, followed by stirring at room temperature for 1 hour to uniformly dissolve the dye, to yield a colored smoking oil of good storage stability.

The thus-obtained colored smoking oil 16 was set to a smoking apparatus for testing equipped with a double-tube steel nozzle-like heating tube 10 of about 30 mm inside diameter, illustrated in Figure 1. While keeping the nozzle-like heating tube 10 heated at 400 to 500°C using an electric heating wire 12, the colored smoking oil 16 was added drop by drop to the nozzle-like heating tube 10 being supplied with air at a rate of 3 to 5 m/s using a compressor 14. A colored smoke 18 of brilliant dense yellow color was obtained. The properties of the colored smoke and the storage stability of the colored smoking oil are shown in Table 2 below. In Figure 1, the numerical symbol 20 shows a sliding autotransformer; 22, a pressure gauge; 24, a thermometer.

### Examples 2 through 7

Colored smoking oils were obtained in the same manner as in Example 1 except that the liquid dye used in Example 1 (Example Dye A-1) was replaced with the respective dyes of the present invention listed in Table 2. The storage stabilities of the colored smoking oils are shown in Table 2 below.

The obtained colored smoking oils were tested in the same manner as in Example 1. The colored smokes shown in Table 2 were obtained.

### Comparative Examples 1 through 5

Colored smoking oils were prepared by a conventional method using the comparative dyes listed in Table 1 in place of the oil-soluble dyes of the present invention used in the above Examples. The coloring agent mostly remained unsolved, indicating poor storage stability.

These colored smoking oils were tested in the same manner as in Example 1. As shown in Table 2, colored smokes inferior to those of Examples in color density and brilliancy were obtained.

**Table 2**

| Example No. | Example Dye | Colored smoke | | | Colored smoking oil storage stability |
|---|---|---|---|---|---|
| | | Hue | Brilliancy | Color density | |
| 1 | A - 1 | Yellow | ⓞ | ○ | ⓞ |
| 2 | A - 4 | Yellow | ⓞ | ⓞ | ⓞ |
| 3 | A - 6 | Orange | ⓞ | ⓞ | ⓞ |
| 4 | B - 1 | Bluish red | ⓞ | ⓞ | ⓞ |
| 5 | C - 1 | Blue | ⓞ | ⓞ | ⓞ |
| 6 | C - 2 | Blue | ⓞ | ⓞ | ⓞ |
| 7 | (A-1):(C-1)=2:3 [blend ratio] | Green | ⓞ | ⓞ | ⓞ |
| Comparative Example 1 | Comparative-1 | Yellow | ○ | X | X |
| Comparative Example 2 | Comparative-3 | Orange | ⓞ | ○ | X |
| Comparative Example 3 | Comparative-4 | Red | ○ | X | X |
| Comparative Example 4 | Comparative-5 | Blue | ⓞ | ⓞ | X |
| Comparative Example 5 | (Comparative-1):(Comparative-5) = 2:3 [blend ratio] | Green | ○ | ○ | X |
| ⓞ : Excellent ○ : Good X : Poor | | | | | |

### Example 8

A colored smoking oil was prepared by adding 80 parts of a dense solution comprising 50 parts of a petroleum solvent (n-octane, boiling point 125.6°C ) and 30 parts of the dye of the present invention (Example Dye B-1) to 70 parts of a smoking base oil (paraffin series, igniting point 120 °C ) and uniformly mixing them.

The obtained colored smoking oil was tested in the same manner as in Example 1. A bulky bluish red densely colored smoke was obtained.

## Claims

1. A colored smoking oil comprising a naphthene-series or paraffin-series mineral oil and/or a high boiling petroleum organic solvent as a smoking base oil and a coloring agent, wherein said coloring agent is one or more kinds of sec-butylphenylazo oil-soluble dye represented by the following formula soluble in said smoking base oil at concentrations of not lower than 20% by weight, which coloring agent is contained in solution at 15 to 40% by weight: 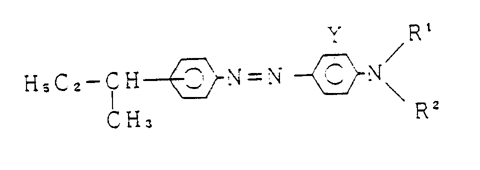 wherein R¹ and R² independently represent an alkyl group, hydroxyalkyl group or alkoxyalkyl group having 1 to 8 carbon atoms, and at least one of R¹ and R² is hydroxyalkyl group or alkoxyalkyl group except for β-alkoxyethyl group; Y represents a hydrogen, an alkyl group having 1 or 2 carbon atoms or an alkoxy group having 1 or 2 carbon atoms.

2. A colored smoking oil comprising a naphthene-series or paraffin-series mineral oil, or a naphthene-series or paraffin-series mineral oil and a high boiling petroleum organic solvent as a smoking base oil which can generate bulky white smoke at 400 to 500 °C and a coloring agent, wherein said coloring agent is one or more kinds of sec-butylphenylazo oil-soluble dye represented by the following formula I soluble in said smoking base oil at concentrations of not lower than 20% by weight, which coloring agent is contained in solution at 15 to 40% by weight: 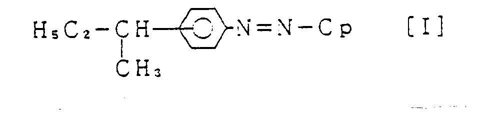 wherein Cp represents a coupling component residue selected from the group consisting of the following formulas (a), (b) and (c), 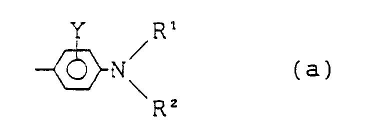 wherein R¹ and R² independently represents an alkyl group, hydroxyalkyl group or alkoxyalkyl group having 1 to 8 carbon atoms; Y represents a hydrogen, an alkyl group having 1 or 2 carbon atoms or an alkoxy group having 1 or 2 carbon atoms, 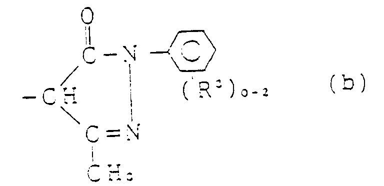 wherein (R³)₀₋₂ means zero to two substituents R³, each R³ independently representing an alkyl group having 1 to 4 carbon atoms or an alkoxy group having 1 to 8 carbon atoms, 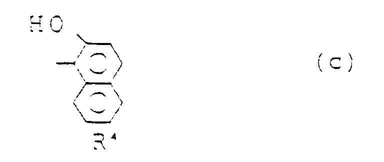 wherein R⁴ represents a hydrogen, an alkyl group having 1 to 12 carbon atoms, an alkoxy group having 1 to 8 carbon atoms or a styryl group.

3. A colored smoking oil comprising a naphthene-series or paraffin-series mineral oil, or a naphthene-series or paraffin-series mineral oil and a high boiling petroleum organic solvent as a smoking base oil and a coloring agent, wherein said coloring agent is one or more kinds of anthraquinone oil-soluble dye represented by the following formula II soluble in said smoking base oil at concentrations of not lower than 20% by weight, which coloring agent is contained in solution at 15 to 40% by weight: 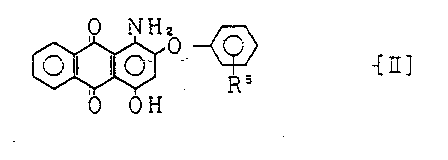 wherein R⁵ represents an alkyl group having 4 to 12 carbon atoms or an alkoxy group having 4 to 12 carbon atoms.

4. A colored smoking oil comprising a naphthene-series or paraffin-series mineral oil, or a naphthene-serie or paraffin-series mineral oil and a high boiling petroleum organic solvent as a smoking base oil and a coloring agent, wherein said coloring agent is one or more kinds of anthraquinone oil-soluble dye represented by the following formula III soluble in said smoking base oil at concentrations of not lower than 20% by weight, which coloring agent is contained in solution at 15 to 40% by weight: 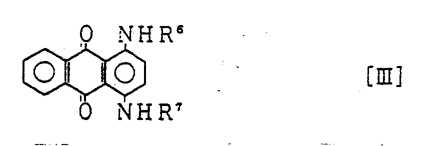 wherein R⁶ and R⁷ independently represent an alkyl group having 4 to 12 carbon atoms or an alkoxyalkyl group having 4 to 12 carbon atoms.

5. A colored smoking oil comprising a naphthene-series or paraffin-series mineral oil and/or a high boiling petroleum organic solvent as a smoking base oil and a coloring agent, wherein said coloring agent is a mixture of at least two types of oil-soluble dyes represented by mutually different formulas in said smoking base oil at concentrations of not lower than 20% by weight selected from the group consisting of a sec-butylphenylazo oil-soluble dye represented by the following formula I, an anthraquinone oil-soluble dye represented by the following formula II and an anthraquinone oil-soluble dye represented by the following formula III, which coloring agent is contained in solution at 15 to 40% by weight: 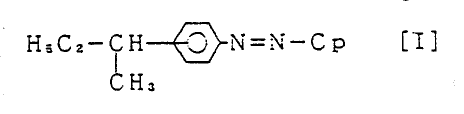 wherein Cp represents a coupling component residue selected from the group consisting of the following formulas (a), (b) and (c), 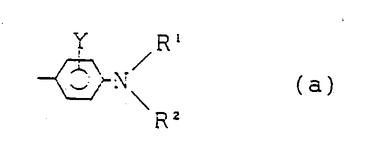 wherein R¹ and R² independently represent an alkyl group, hydroxyalkyl group or alkoxylalkyl group having 1 to 8 carbon atoms; Y represents a hydrogen, an alkyl group having 1 or 2 carbon atoms or an alkoxy group having 1 or 2 carbon atoms, 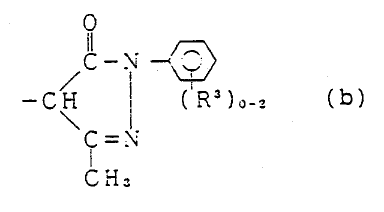 wherein (R³)₀₋₂ means zero to two substituents R³, each R³ independently representing an alkyl group having 1 to 4 carbon atoms or an alkoxy group having 1 to 8 carbon atoms, 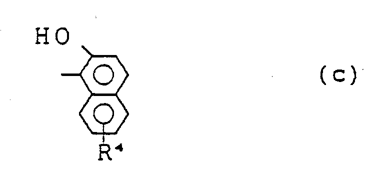 wherein R⁴ represents a hydrogen, an alkyl group having 1 to 12 carbon atoms, an alkoxy group having 1 to 8 carbon atoms or a styryl group, 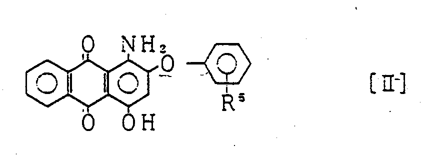 wherein R⁵ represents an alkyl group having 4 to 12 carbon atoms or an alkoxy group having 4 to 12 carbon atoms, 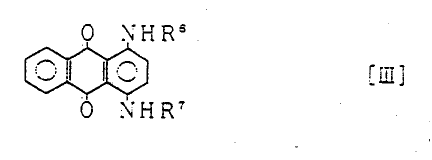 wherein R⁶ and R⁷ independently represent an alkyl group having 4 to 12 carbon atoms or an alkoxyalkyl group having 4 to 12 carbon atoms.

6. The colored smoking oil of claim 1, 2, 3, 4 or 5 wherein the oil-soluble dye contained as a coloring agent has a molecular weight of not higher than 600.

7. The colored smoking oil of claim 1, 2, 3, 4 or 5 wherein said naphthene-series or paraffin-series mineral oil has a boiling point in the range from about 200 to 400 °C.

8. The colored smoking oil of claim 1, 2, 3, 4, or 5 wherein said high boiling petroleum organic solvent has a boiling point of not lower than 100 °C.

9. The colored smoking oil of claim 1, 2, 3, 4 or 5 containing 20 to 30% by weight of one or more kinds or the above oil-soluble dye dissolved therein.

## Patentansprüche

1. Farbiges rauchbildendes Öl, enthaltend ein Mineralöl einer Naphthenreihe oder einer Paraffinreihe und/oder ein hochsiedendes petroleumorganisches Lösungsmittel als rauchbildendes Basisöl und ein Färbemittel, wobei das Färbemittel eine oder mehrere Arten von sec-Butylphenylazo-öllöslichem Farbstoff ist, dargestellt durch die folgende Formel, löslich in dem rauchbildenden Basisöl bei Konzentrationen von nicht niedriger als 20 Gew.-%, welches Färbemittel in Lösung zu 15 bis 40 Gew.-% enthalten ist: 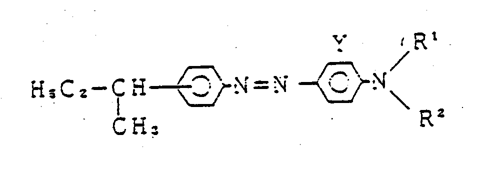 wobei R¹ und R² unabhängig eine Alkyl-Gruppe, Hydroxyalkyl-Gruppe oder Alkoxyalkyl-Gruppe mit 1 bis 8 Kohlenstoffatomen darstellt, und mindestens eines von R¹ und R² eine Hydroxyalkyl-Gruppe oder Alkoxyalkyl-Gruppe mit Ausnahme der β-Alkoxyalkyl-Gruppe; Y ein Wasserstoffatom, eine Alkyl-Gruppe mit 1 oder 2 Kohlenstoffatomen oder eine Alkoxy-Gruppe mit 1 oder 2 Kohlenstoffatomen darstellt.

2. Farbiges rauchbildendes Öl enthaltend ein Mineralöl einer Naphthenreihe oder Praffinreihe, oder ein Mineralöl einer Naphthenreihe oder Paraffinreihe und ein hochsiedendes petroleumorganisches Lösungsmittel als rauchbildendes Basisöl, das bei 400 bis 500 °C weißen Rauch von großem Umsatz erzeugen kann, und ein Färbemittel, wobei das Färbemittel eine oder mehrere Arten von sec-Butylphenylazo-öllöslichem Farbstoff ist, dargestellt durch die folgende Formel I, löslich in dem rauchbildenden Basisöl bei Konzentrationen von nicht niedriger als 20 Gew.-%, wobei das Färbemittel in der Lösung mit 15 bis 40 Gew.-% enthalten ist: 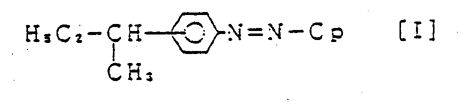 wobei Cp einen Kupplungskomponentenrest darstellt, ausgewählt aus der Gruppe, bestehend aus den folgenden Formeln (a), (b) und (c), 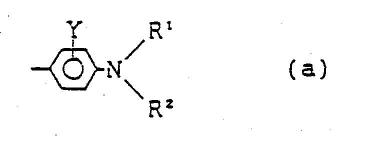 wobei R¹ und R² unabhängig voneinander eine Alkyl-Gruppe, Hydroxyalkyl-Gruppe oder Alkoxyalkyl-Gruppe mit 1 bis 8 Kohlenstoffatomen darstellt; Y ein Wasserstoffatom, eine Alkyl-Gruppe mit 1 oder 2 Kohlenstoffatomen oder eine Alkoxy-Gruppe mit 1 oder 2 Kohlenstoffatomen darstellt, 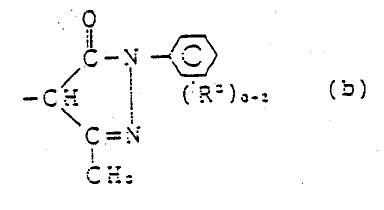 wobei (R³)₀₋₂ null bis zwei Substituenten R³ bedeutet, wobei jedes R³ unabhängig voneinander eine Alkyl-Gruppe mit 1 bis 4 Kohlenstoffatomen oder eine Alkoxy-Gruppe mit 1 bis 8 Kohlenstoffatomen darstellt, 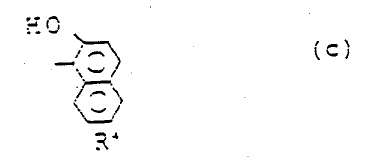 worin R⁴ ein Wasserstoffatom, eine Alkyl-Gruppe mit 1 bis 12 Kohlenstoffatomen, eine Alkoxy-Gruppe mit 1 bis 8 Kohlenstoffatomen oder eine Styrylgruppe darstellt.

3. Farbiges rauchbildendes Öl, enthaltend ein Mineralöl einer Naphthenreihe oder Paraffinreihe, oder ein Mineralöl einer Naphthenreihe oder Paraffinreihe und ein hochsiedendes petroleumorganisches Lösungsmittel als rauchbildendes Basisöl und ein Färbemittel, wobei das Färbemittel eines oder mehrere Arten von Anthraquinon-öllöslichem Farbstoff ist, dargestellt durch die folgende Formel II, löslich in dem rauchbildenden Basisöl bei Konzentrationen von nicht niedriger als 20 Gew.-%, wobei das Färbemittel in der Lösung zu 15 bis 40 Gew.-% enthalten ist: 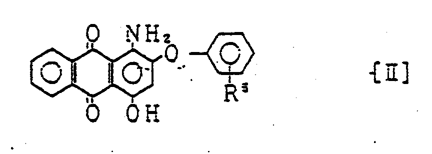 wobei R⁵ eine Alkyl-Gruppe mit 4 bis 12 Kohlenstoffatomen oder eine Alkoxy-Gruppe mit 4 bis 12 Kohlenstoffatomen darstellt.

4. Farbiges rauchbildendes Öl, enthaltend ein Mineralöl einer Naphthenreihe oder Paraffinreihe, oder ein Mineralöl einer Naphthenreihe oder Paraffinreihe und ein hochsiedendes petroleumorganisches Lösungsmittel als rauchbildendes Basisöl und ein Färbemittel, wobei das Färbemittel eines oder mehrere Arten von Antraquinon-öllöslichem Farbstoff ist, dargestellt durch die folgende Formel III, löslich in dem rauchbildenden Basisöl bei Konzentrationen von nicht niedriger als 20 Gew.-%, wobei das Färbemittel in der Lösung zu 15 bis 40 Gew.-% enthalten ist: 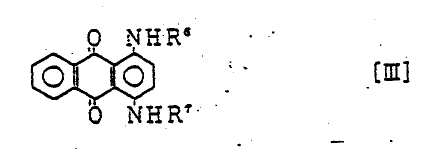 wobei R⁶ und R⁷ unabhängig voneinander eine Alkyl-Gruppe mit 4 bis 12 Kohlenstoffatomen oder eine Alkoxyalkyl-Gruppe mit 4 bis 12 Kohlenstoffatomen darstellt.

5. Farbiges rauchbildendes Öl, enthaltend ein Mineralöl einer Naphthenreihe oder Paraffinreihe und/oder ein hochsiedendes petroleumorganisches Lösungsmittel als ein rauchbildendes Basisöl und ein Färbemittel, wobei das Färbemittel eine Mischung von mindestens zwei Arten von öllöslichen Farbstoffen ist, dargestellt durch wechselseitig verschiedene Formeln in dem rauchbildenden Basisöl bei Konzentrationen von nicht niedriger als 20 Gew.-%, ausgewählt aus der Gruppe, bestehend aus einem sec-Butylphenylazo-öllöslichem Farbstoff, dargestellt durch die folgende Formel I, einem Antraquinon-öllöslichem Farbstoff, dargestellt durch die folgende Formel II und einem Antraquinon-öllöslichem Farbstoff, dargestellt durch die folgende Formel III, wobei das Färbemittel in der Lösung mit 15 bis 40 Gew.-% enthalten ist: 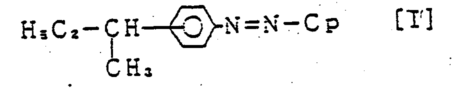 wobei Cp einen Kupplungskomponentenrest darstellt, ausgewählt aus der Gruppe bestehend aus den folgenden Formeln (a), (b) und (c), 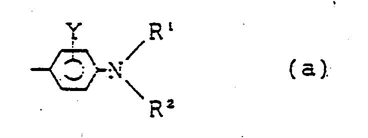 wobei R¹ und R² unabhängig voneinander eine Alkyl-Gruppe, Hydroxyalkyl-Gruppe oder Alkoxyalkyl-Gruppe mit 1 bis 8 Kohlenstoffatomen darstellt; Y ein Wasserstoffatom, eine Alkyl-Gruppe mit 1 oder 2 Kohlenstoffatomen oder eine Alkoxy-Gruppe mit 1 oder 2 Kohlenstoffatomen darstellt, 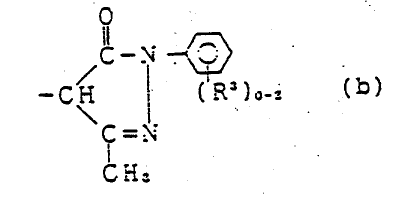 wobei (R³)₀₋₂ null bis zwei Substituenten R³ bedeutet, wobei jedes R³ unabhängig voneinander eine Alkyl-Gruppe mit 1 bis 4 Kohlenstoffatomen oder eine Alkoxy-Gruppe mit 1 bis 8 Kohlenstoffatomen darstellt, 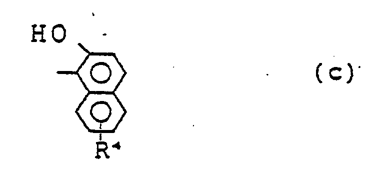 wobei R⁴ ein Wasserstoffatom, eine Alkyl-Gruppe mit 1 bis 12 Kohlenstoffatomen, eine Alkoxy-Gruppe mit 1 bis 8 Kohlenstoffatomen oder eine Styryl-Gruppe darstellt, 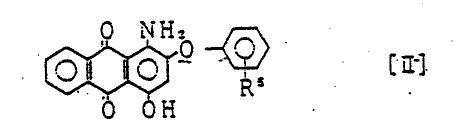 wobei R⁵ eine Alkoxy-Gruppe mit 4 bis 12 Kohlenstoffatomen oder eine Alkoxy-Gruppe mit 4 bis 12 Kohlenstoffatomen darstellt, 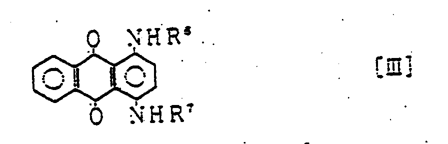 wobei R⁶ und R⁷ unabhängig voneinander eine Alkyl-Gruppe mit 4 bis 12 Kohlenstoffatomen oder eine Alkoxyalkyl-Gruppe mit 4 bis 12 Kohlenstoffatomen darstellt.

6. Farbiges rauchbildendes Öl nach Anspruch 1, 2, 3, 4 oder 5, wobei der öllösliche Farbstoff, der als Färbemittel enthalten ist, ein Molekulargewicht von nicht höher als 600 hat.

7. Farbiges rauchbildendes Öl nach Anspruch 1, 2, 3, 4 oder 5, wobei das Mineralöl der Naphthenreihe oder Paraffinreihe einen Siedepunkt in einem Bereich von in etwa 200 bis 400 °C hat.

8. Farbiges rauchbildendes Öl nach Anspruch 1, 2, 3, 4 oder 5, wobei das hochsiedende petroleumorganische Lösungsmittel einen Siedepunkt von nicht niedriger als 100 °C hat.

9. Farbiges rauchbildendes Öl nach Anspruch 1, 2, 3, 4 oder 5, enthaltend 20 bis 30 Gew.-% von einer oder mehreren Arten des obigen öllöslichen Farbstoffes darin aufgelöst.

## Revendications

1. Huile fumigène colorée comprenant une huile minérale de la série du naphtène ou de la série des paraffines et/ou un solvant organique à point d'ébullition élevé, issu du pétrole, comme huile de base fumigène et un agent colorant, dans laquelle ledit agent colorant est constitué d'un ou plusieurs types de colorants sec-butylphénylazo solubles dans l'huile, ayant une solubilité dans ladite huile de base fumigène non-inférieure à 20 % en poids et représenté par la formule suivante : 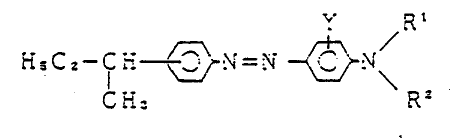 dans laquelle R¹ et R² représentent chacun indépendamment un groupe alkyle, hydroxyalkyle ou alcoxyalkyle ayant 1 à 8 atomes de carbone, au moins l'un de R¹ et R² étant un groupe hydroxyalkyle ou alcoxyalkyle à l'exception du groupe β-alcoxyéthyle, et Y représente un atome d'hydrogène, un groupe alkyle ayant 1 ou 2 atomes de carbone ou un groupe alcoxy ayant 1 ou 2 atomes de carbone,
ledit agent colorant étant présent en solution à une teneur de 15 à 40 % en poids.

2. Huile fumigène colorée comprenant une huile minérale de la série du naphtène ou de la série des paraffines, ou une huile minérale de la série du naphtène ou de la série des paraffines et un solvant organique à point d'ébullition élevé, issu du pétrole, en tant qu'huile de base fumigène qui peut produire une fumée blanche volumineuse à une température de 400 à 500 °C, et un agent colorant, dans laquelle ledit agent colorant est constitué d'un ou plusieurs types de colorants sec-butylphénylazo solubles dans l'huile, ayant une solubilité dans ladite huile de base fumigène non-inférieure à 20 % en poids et représenté par la formule I suivante : 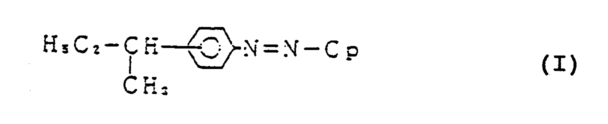 dans laquelle Cp représente un reste de copulant choisi parmi les restes de formules (a), (b) et (c) suivantes : 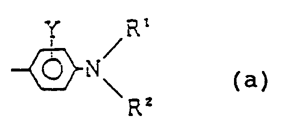 dans laquelle R¹ et R² représentent chacun indépendamment un groupe alkyle, hydroxyalkyle ou alcoxyalkyle ayant 1 à 8 atomes de carbone, et Y représente un' atome d'hydrogène, un groupe alkyle ayant 1 ou 2 atomes de carbone ou un groupe alcoxy ayant 1 ou 2 atomes de carbone, 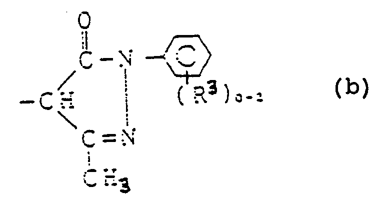 dans laquelle (R³)₀₋₂ désigne zéro à deux substituants R³, chaque substituant R³ représentant indépendamment un groupe alkyle ayant 1 à 4 atomes de carbone ou un groupe alcoxy ayant 1 à 8 atomes de carbone, 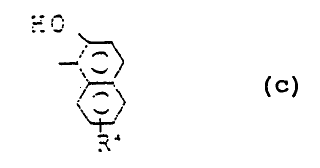 dans laquelle R⁴ représente un atome d'hydrogène, un groupe alkyle ayant 1 à 12 atomes de carbone, un groupe alcoxy ayant 1 à 8 atomes de carbone ou un groupe styryle,
ledit agent colorant étant présent en solution à une teneur de 15 à 40 % en poids.

3. Huile fumigène colorée comprenant une huile minérale de la série du naphtène ou de la série des paraffines, ou une huile minérale de la série du naphtène ou de la série des paraffines et un solvant organique à point d'ébullition élevé, issu du pétrole, en tant qu'huile de base fumigène, et un agent colorant, dans laquelle ledit agent colorant est constitué d'un ou plusieurs types de colorants anthraquinoniques solubles dans l'huile, ayant une solubilité dans ladite huile de base fumigène non-inférieure à 20 % en poids et représentés par la formule II suivante : 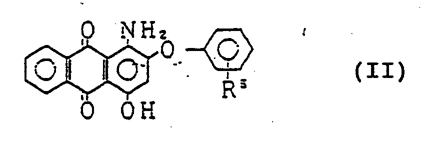 dans laquelle R⁵ représente un groupe alkyle ayant 4 à 12 atomes de carbone ou un groupe alcoxy ayant 4 à 12 atomes de carbone, ledit agent colorant étant présent en solution à une teneur de 15 à 40 % en poids.

4. Huile fumigène colorée comprenant une huile minérale de la série du naphtène ou de la série des paraffines, ou une huile minérale de la série du naphtène ou de la série des paraffines et un solvant organique à point d'ébullition élevé, issu du pétrole, en tant qu'huile de base fumigène, et un agent colorant, dans laquelle ledit agent colorant est constitué d'un ou plusieurs types de colorants anthraquinoniques solubles dans l'huile, ayant une solubilité dans ladite huile de base fumigène non-inférieure à 20 % en poids et représentés par la formule III suivante : 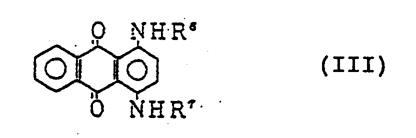 dans laquelle R⁶ et R⁷ représentent chacun indépendamment un groupe alkyle ayant 4 à 12 atomes de carbone ou un groupe alcoxyalkyle ayant 4 à 12 atomes de carbone, ledit agent colorant étant présent en solution à une teneur de 15 à 40 % en poids.

5. Huile fumigène colorée comprenant une huile minérale de la série du naphtène ou de la série des paraffines et/ou un solvant organique à point d'ébullition élevé, issu du pétrole, comme huile de base fumigène et un agent colorant, dans laquelle ledit agent colorant est un mélange d'au moins deux types de colorants solubles dans l'huile, représentés par des formules différentes et ayant une solubilité dans ladite huile de base fumigène non-inférieure à 20 % en poids, qui sont choisis parmi les colorants sec-butylphénylazo solubles dans l'huile représentés par la formule I suivante : 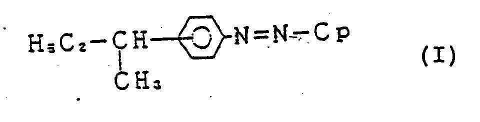 dans laquelle Cp représente un reste de copulant choisi parmi les restes de formules (a), (b) et (c) suivantes : 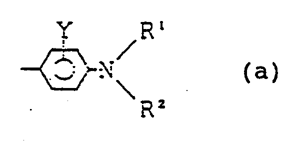 dans laquelle R¹ et R² représentent chacun indépendamment un groupe alkyle, hydroxyalkyle ou alcoxyalkyle ayant 1 à 8 atomes de carbone, et Y représente un atome d'hydrogène, un groupe alkyle ayant 1 ou 2 atomes de carbone ou un groupe alcoxy ayant 1 ou 2 atomes de carbone, 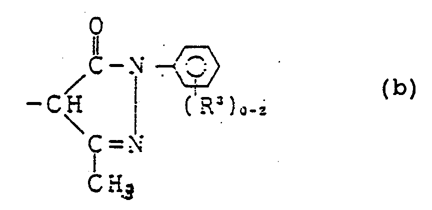 dans laquelle (R³)₀₋₂ désigne zéro à deux substituants R³, chaque substituant R³ représentant indépendamment un groupe alkyle ayant 1 à 4 atomes de carbone ou un groupe alcoxy ayant 1 à 8 atomes de carbone, 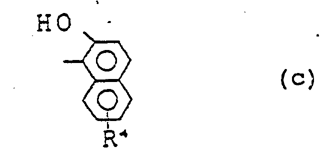 dans laquelle R⁴ représente un atome d'hydrogène, un groupe alkyle ayant 1 à 12 atomes de carbone, un groupe alcoxy ayant 1 à 8 atomes de carbone ou un groupe styryle,
les colorants anthraquinoniques solubles dans l'huile représentés par la formule (II) suivante : 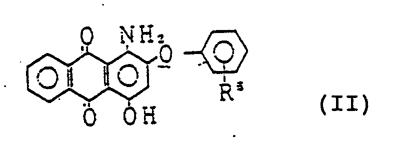 dans laquelle R⁵ représente un groupe alkyle ayant 4 à 12 atomes de carbone ou un groupe alcoxy ayant 4 à 12 atomes de carbone,
et les colorants anthraquinoniques solubles dans l'huile représentés par la formule (III) suivante : 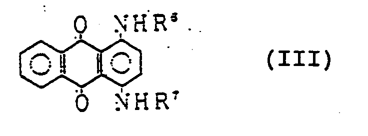 dans laquelle R⁶ et R⁷ représentent chacun indépendamment un groupe alkyle ayant 4 à 12 atomes de carbone ou un groupe alcoxyalkyle ayant 4 à 12 atomes de carbone,
ledit agent colorant étant présent en solution à une teneur de 15 à 40 % en poids.

6. Huile fumigène colorée selon l'une quelconque des revendications 1 à 5, pour laquelle le colorant soluble dans l'huile, présent comme agent colorant, a une masse moléculaire non-supérieure à 600.

7. Huile fumigène colorée selon l'une quelconque des revendications 1 à 5, pour laquelle ladite huile minérale de la série du naphtène ou de la série des paraffines a un point d'ébullition compris dans l'intervalle allant d'environ 200 °C à environ 400 °C.

8. Huile fumigène colorée selon l'une quelconque des revendications 1 à 5, pour laquelle ledit solvant organique à point d'ébullition élevé, issu du pétrole, a un point d'ébullition non-inférieur à 100 °C.

9. Huile fumigène colorée selon l'une quelconque des revendications 1 à 5, qui contient à l'état dissous 20 à 30 % en poids d'un ou plusieurs types des colorants solubles dans l'huile cités précédemment.
